# FASCICULE DE BREVET EUROPEEN

(11) **EP 2 783 907 B1**
(45) Date de publication et mention de la délivrance du brevet: **23.09.2015**
(21) Numéro de dépôt: 14161584.9
(22) Date de dépôt: 25.03.2014
(51) Int. Cl.: B60M 1/24

(54) **Système de maintien d'une caténaire**
System zur Halterung eines Oberleitungseils
System for supporting a catenary

(30) Priorité: 28.03.2013 FR 1352788
(43) Date de publication de la demande: 01.10.2014
(73) Titulaire: SNCF Reseau, 75013 Paris (FR)
(72) Inventeur: Gouverneur, Claude, 28190 MITTAINVILLIERS (FR)
(74) Mandataire: Argyma

(56) Documents cités:
- EP-A1- 2 687 399
- WO-A2-2011/151583
- CN-U- 202 608 589
- DE-C- 608 282
- DE-C- 621 006
- DE-U1- 29 507 366
- FR-A- 1 192 309

## Description

### DOMAINE TECHNIQUE

La présente invention concerne le domaine des installations ferroviaires et, plus particulièrement, celui des équipements pour l'alimentation en courant électrique des locomotrices circulant sur les voies. L'invention se rapporte à un dispositif de support d'un câble porteur d'une caténaire et à un système de maintien d'une caténaire à un poteau disposé le long d'une voie ferrée.

### ETAT DE LA TECHNIQUE

Dans le but de transmettre du courant électrique aux locomotrices circulant sur une voie ferrée, un fil conducteur, appelé fil de contact, est disposé au-dessus de la voie et alimente en courant des pantographes qui sont situés sur la partie supérieure de la locomotrice. Un pantographe est un dispositif qui permet à une locomotrice électrique de capter le courant par frottement sur le fil de contact.

Afin de supporter le fil de contact au-dessus de la voie ferrée, des poteaux sont disposés, de loin en loin, le long de la voie. Ils comportent, chacun, un système de maintien du fil de contact, appelé armement, placé en porte à faux par rapport au poteau.

Une solution connue du document FR 2960487 A1 de la société S.N.C.F, illustrée par la figure 1, consiste à suspendre le fil de contact 1 à un câble porteur 2 qui est lui-même suspendu à chaque poteau 4, par l'intermédiaire d'un système de maintien 3, et qui prend une forme arquée entre deux poteaux 4 consécutifs. Le fil de contact 1 est suspendu au câble porteur 2 par l'intermédiaire d'une succession de câbles verticaux 5, appelés pendules, dont les longueurs sont adaptées pour maintenir le fil de contact 1 sensiblement rectiligne, selon un axe Z-Z, entre les poteaux 4. L'ensemble 6 formé par le fil de contact 1, le câble porteur 2 et les pendules 5 est dénommé caténaire (ou Ligne Aérienne de Contact).

Le document FR2960487 A1 décrit donc un système de maintien d'une caténaire au-dessus d'une voie ferrée, ladite caténaire comprenant au moins un câble porteur d'au moins un fil de contact pour l'alimentation d'un pantographe d'un véhicule ferroviaire circulant sur la voie ferrée, ledit système de maintien comprenant une console et un dispositif de support du câble porteur de la caténaire, ladite console comprenant au moins un bras de support, destiné à être fixé par l'une de ses extrémités à un poteau sensiblement vertical disposé le long de la voie ferrée et par une autre de ses extrémités à la caténaire, et un montant de fixation du dispositif de support.

Le système de maintien 3 de la caténaire 6 au poteau 4 comprend un hauban 7 et une console 8. La console 8 comporte un premier bras de support 9a monté par l'une de ses extrémités 9a1 sur le poteau 4 associé et maintenu également au poteau 4 par le hauban 7. La console 8 comporte un second bras de support 9b monté au niveau de l'extrémité libre 9a2 du premier bras 9a et permettant, d'une part, le support du câble porteur 2 et, d'autre part, le maintien du fil de contact 1 sensiblement dans l'alignement vertical du câble porteur 2 par l'intermédiaire d'une tige ou bras de rappel 9b1.

Le câble porteur 2 est relié au second bras 9b par l'intermédiaire d'un dispositif de support de câble. Un tel dispositif se présente soit sous la forme d'une plate-forme s'étendant horizontalement depuis le second bras 9b et sur laquelle repose le câble porteur 2, soit sous la forme d'un crochet relié au second bras 9b par son extrémité supérieure et qui retient le câble porteur 2 en suspension.

Afin de solidariser le câble porteur 2 et le dispositif de support, deux étriers en forme de U sont positionnés à cheval sur le câble porteur 2 et fixés au dispositif de support par quatre systèmes de vis et d'écrous.

Avec une telle fixation par étriers, l'assemblage du câble porteur et du dispositif de support est long et fastidieux, ce qui présente un premier inconvénient.

De plus, il est apparu que le serrage prescrit de 25 Nm des étriers sur le câble porteur n'est pas toujours respecté par les opérateurs, ce qui présente un risque de cisaillement des brins. Or, un tel cisaillement fragilise le câble porteur et peut en entraîner la rupture, ce qui présente un second inconvénient.

Par ailleurs, la clé de serrage utilisée classiquement pour serrer les quatre écrous aux étriers de chaque dispositif de support est une clé dynamométrique dont l'emploi constitue une importante perte de temps, ce qui présente un troisième inconvénient.

En outre, le nombre de constituants des dispositifs de support connus est important, notamment pour le dispositif à crochet, ce qui présente un quatrième inconvénient, particulièrement en termes de coût, de complexité, de temps d'assemblage et de réglage.

Enfin, les dispositifs de support connus ne sont pas réglables aisément car ils sont fixés de manière permanente au second bras de la console, par exemple en étant issus de matière du second bras, ou bien nécessitent le remplacement de certaines pièces du système de maintien telles que, par exemple, le hauban ou un bras de la console. Les solutions de l'art antérieur ne permettent donc pas d'adapter aisément la hauteur du fil de contact autorisant un pantographe d'un véhicule circulant sur la voie à venir en contact avec ledit fil.

### PRESENTATION GENERALE DE L'INVENTION

La présente invention a pour but de remédier à ces inconvénients en proposant un dispositif de support d'un câble porteur qui soit à la fois simple, aisé à monter, réglable et dont le serrage n'est pas fragilisant pour le câble porteur.

A cet effet, l'invention selon la revendication 1 a pour objet un système de maintien d'une caténaire tel que décrit ci-dessus, le dispositif de support dudit système comprenant :
- un bras de liaison monobloc comprenant une extrémité de fixation, agencée pour être montée sur ladite console, et une extrémité libre se présentant sous la forme d'une goulotte de support d'un câble porteur et,
- au moins un organe de fixation adapté pour solidariser le bras de liaison à la console.

L'organe de fixation permet ainsi de solidariser, c'est à dire d'immobiliser, le bras par rapport à la console afin d'en rigidifier la liaison. La goulotte de support du câble porteur est en outre avantageusement reliée à la console par un élément monobloc, de préférence pourvu de nervures ou de saillies de renforcement, de manière à renforcer le support du câble porteur. Un tel bras de liaison monobloc permet de supprimer des articulations et de réduire le nombre de constituants du dispositif, tout en permettant un montage aisé et rapide de celui-ci sur la console.

Un tel organe de fixation permet en outre de régler aisément le dispositif par rapport à la console, par exemple, en autorisant une fixation du dispositif dans différentes positions, notamment à différentes hauteurs. En d'autres termes, une telle fixation permet de maintenir le fil de contact à différentes hauteurs au-dessus de la voie ferrée de manière à être adaptée au passage d'un pantographe d'un véhicule circulant sur la voie ferrée.

Selon une caractéristique de l'invention, l'extrémité de fixation du bras de liaison se présente sous la forme d'une paroi de butée agencée pour venir en appui sur une console d'un système de maintien d'une caténaire.

De préférence, la paroi de butée est agencée pour venir en appui sur un montant de fixation, de préférence cylindrique et de préférence sensiblement vertical, d'une console d'un système de maintien d'une caténaire. Le montant de fixation se présente de préférence sous la forme d'un tube. Le montant de fixation s'étend de préférence sous un bras de support d'une console d'un système de maintien d'une caténaire.

Selon un aspect de l'invention, le bras de liaison comprend au moins un renfort, de préférence trois, s'étendant en saillie depuis la paroi de butée de manière à supporter la goulotte de support d'un câble porteur.

Avantageusement, la paroi de butée, le ou les renforts et la goulotte de support sont issus d'une même matière.

Selon une autre caractéristique de l'invention, le bras de liaison est agencé pour être monté par son extrémité inférieure sur une console d'un système de maintien d'une caténaire. Par les termes « extrémité inférieure », on entend l'extrémité située à la base du dispositif de support en position d'utilisation de celui-ci, monté sur la console. Le câble porteur est ainsi porté par la goulotte de support et le bras de liaison, qui est situé majoritairement sous la goulotte, de sorte que le dispositif supporte ainsi le câble porteur.

De préférence, l'organe de fixation est un organe de serrage.

De préférence encore, l'organe de serrage comprend un étrier en forme de U et au moins un écrou de serrage. Un tel étrier est agencé pour entourer un montant de fixation d'une console d'un système de maintien d'une caténaire et pour être fixé à la paroi de butée par un ou une pluralité d'écrous, de préférence un écrou par bras de l'étrier en forme de U. Un étrier en U permet notamment de fixer aisément, simplement et solidement le dispositif à un montant tubulaire de la console, en utilisant un minimum de pièces. Un tel étrier de fixation permet aussi de régler facilement la position du dispositif puisqu'il est alors simple, par exemple, de desserrer le ou les écrous de fixation de l'étrier au dispositif puis de modifier la position de celui-ci avant de resserrer le ou les écrous.

De manière avantageuse, la paroi de butée comprend au moins une ouverture de part et d'autre de la butée destinée à recevoir l'organe de fixation, par exemple, les extrémités de l'étrier en forme de U.

Selon un aspect de l'invention, l'organe de serrage comprend un élément intercalaire agencé pour être disposé entre l'organe de fixation et la console de manière à renforcer la liaison, et notamment augmenter l'adhérence, du dispositif de support de câble porteur sur la console et les solidariser ainsi en translation et/ou en rotation.

Selon une caractéristique de l'invention, la goulotte de support possède une section en forme de V, par exemple formant un angle d'environ 90°, permettant avantageusement de recevoir des câbles porteurs de différents diamètres.

Selon une autre caractéristique de l'invention, la goulotte s'étend de part et d'autre du bras de liaison de manière à recevoir le câble porteur. Le câble porteur peut ainsi être disposé sur toute la longueur de la goulotte qui offre ainsi un support conséquent au câble pour le maintenir solidement dans le dispositif de support.

De préférence, le dispositif de support comprend au moins une bride de serrage du câble porteur comprenant une extrémité de fixation et une extrémité libre positionnable de manière à pincer le câble porteur. L'utilisation d'une telle bride permet un serrage par pincement qui fragilise moins le câble qu'un serrage par cisaillement, et ce même en cas de serrage trop important, évitant ainsi une fragilisation du câble porteur qui en entraînerait la rupture. Une telle bride de serrage autorise en outre la goulotte de support à recevoir des câbles porteurs de diamètres différents. Le type de bride, et notamment sa forme, peut ainsi être choisi en fonction du type et/ou du diamètre du câble porteur, par exemple, des câbles porteurs nus (sans gaine) ou protégés (gainés). Par ailleurs, l'utilisation d'une unique bride qui peut être fixée par un système comprenant par exemple une unique vis et un unique écrou (contre quatre écrous avec les étriers de l'art antérieur) permet de limiter le nombre de constituants du dispositif, ce qui permet en particulier de réduire le temps de montage ou de démontage du câble porteur sur le dispositif de support.

Avantageusement, l'extrémité libre de la bride de serrage comprend une portion arquée adaptée pour se conformer au câble porteur, de préférence pour une pluralité de diamètres différents, afin d'en garantir le pincement.

Avantageusement encore, le bras de liaison comprend, au niveau de son extrémité libre, une plateforme de fixation s'étendant, par exemple, sensiblement horizontalement, sur laquelle est fixée l'extrémité de fixation de la bride de serrage. Une telle plateforme permet de rendre la bride plus accessible et donc d'en rendre le montage plus aisé pour un opérateur, par exemple en cas de maintenance de la caténaire.

Selon un aspect de l'invention, la plateforme de fixation de la bride de serrage s'étend depuis la goulotte et/ou depuis le bras de liaison.

De manière avantageuse, la plateforme de fixation s'étend sensiblement horizontalement et la bride de serrage est montée sur la plateforme de manière à permettre un pincement du câble porteur dont la composante majoritaire est verticale, ce qui permet avantageusement de plaquer fermement le câble porteur dans la goulotte de support et de fixer ainsi solidement le câble porteur au système de maintien de la caténaire.

Selon une caractéristique de l'invention, le bras de liaison et/ou la plateforme de fixation sont sensiblement de la même largeur que la bride de serrage de manière à permettre un montage aisé et efficace de la bride sur la plateforme.

Avantageusement, un ensemble peut être formé d'un dispositif tel que défini ci-dessus et d'un jeu de brides de dimensions différentes configurées chacune pour serrer des câbles de diamètres différents. Ainsi, un même dispositif de support peut être utilisé avec des brides de serrages différents et donc avec des câbles différents.

Avantageusement encore, dans un système de maintien d'une caténaire au-dessus d'une voie ferrée, ladite caténaire comprend au moins un câble porteur d'au moins un fil de contact pour l'alimentation d'un pantographe d'un véhicule ferroviaire circulant sur la voie ferrée, ledit système de maintien comprenant une console et un dispositif de support du câble porteur de la caténaire tel que présenté précédemment, ladite console comprenant au moins un bras de support, destiné à être fixé par l'une de ses extrémités à un poteau sensiblement vertical disposé le long de la voie ferrée et par une autre de ses extrémités à la caténaire, et un montant de fixation du dispositif de support. L'extrémité de fixation du bras de liaison monobloc est fixée au montant de fixation de la console par au moins un organe de fixation.

Un tel montant de fixation permet de régler aisément la hauteur du dispositif de support de sorte à permettre le réglage de la caténaire à différentes hauteurs. Le dispositif de support peut aussi être positionné différemment, selon une direction perpendiculaire à l'axe de la voie ferrée, par exemple d'un côté ou de l'autre du montant de fixation.

De préférence, le montant de fixation est tubulaire.

De préférence encore, le montant de fixation est disposé verticalement.

Selon un aspect de l'invention, le système de maintien comprend un premier bras de support, destiné à être fixé par l'une de ses extrémités à un poteau sensiblement vertical disposé le long de la voie ferrée, et un second bras de support fixé par l'une de ses extrémités au niveau de l'extrémité libre du premier bras de support et destiné à être relié, par exemple, par un bras de rappel fixé à son autre extrémité, à un fil de contact d'une caténaire.

De préférence encore, le montant de fixation est disposé sous le second bras de support.

Avantageusement, l'extrémité de fixation du bras de liaison au montant de fixation est positionnée en-dessous de l'extrémité libre du bras de liaison.

De manière avantageuse, le ou les renforts du bras de liaison s'étendent obliquement entre la paroi de butée et la goulotte de support de sorte que la goulotte de support et la paroi de butée ne soient pas superposées. Cela permet d'éloigner la goulotte de support du montant de fixation sur lequel est appuyée la paroi de butée de sorte à recevoir le câble porteur.

L'invention concerne aussi un ensemble formé d'un premier poteau comprenant un premier système de maintien, tel que présenté précédemment, et d'un second poteau disposé consécutivement au premier poteau le long de la voie ferrée et comprenant un second système de maintien, tel que présenté précédemment, ensemble dans lequel, d'une part, le montant de fixation du premier système de maintien est disposé entre le premier poteau et le dispositif de support dudit premier système de maintien, et, d'autre part, le dispositif de support du second système de maintien est disposé entre le second poteau et le montant de fixation dudit second système de maintien.

Un tel agencement permet, en alternant la position du dispositif de support d'un poteau à un autre, disposés consécutivement le long de la voie ferrée, de faire zigzaguer le fil de contact au-dessus de la voie afin de répartir les frottements du fil de contact sur la surface de contact du pantographe. Ceci est rendu possible par le dispositif de support selon l'invention qui peut être aisément monté alternativement de part et d'autre des montant de fixation de deux poteaux consécutifs.

D'autres caractéristiques et avantages de l'invention apparaîtront lors de la description qui suit faite en regard des figures annexées données à titre d'exemples non limitatifs et dans lesquelles des références identiques sont données à des objets semblables.

### DESCRIPTION DES FIGURES

La figure 1 illustre une caténaire suspendue par un système de maintien relié à un poteau.
La figure 2 est une vue de côté d'un dispositif de support d'un câble porteur fixé sur un montant tubulaire de fixation d'un système de maintien selon l'invention.
La figure 3 est une vue en perspective du dispositif de la figure 2.
La figure 4 est une vue éclatée du dispositif de la figure 2.
La figure 5 est une vue partielle du dispositif de la figure 2.
La figure 6 est une vue partielle de côté du dispositif de la figure 2.
La figure 7 est une vue partielle de dessus du dispositif de la figure 2.
La figure 8 est une vue en coupe longitudinale d'une première bride de serrage d'un câble porteur d'un dispositif de support selon l'invention.
La figure 9 est une vue en coupe longitudinale d'une deuxième bride de serrage d'un câble porteur d'un dispositif de support selon l'invention.

### DESCRIPTION DETAILLEE DE L'INVENTION

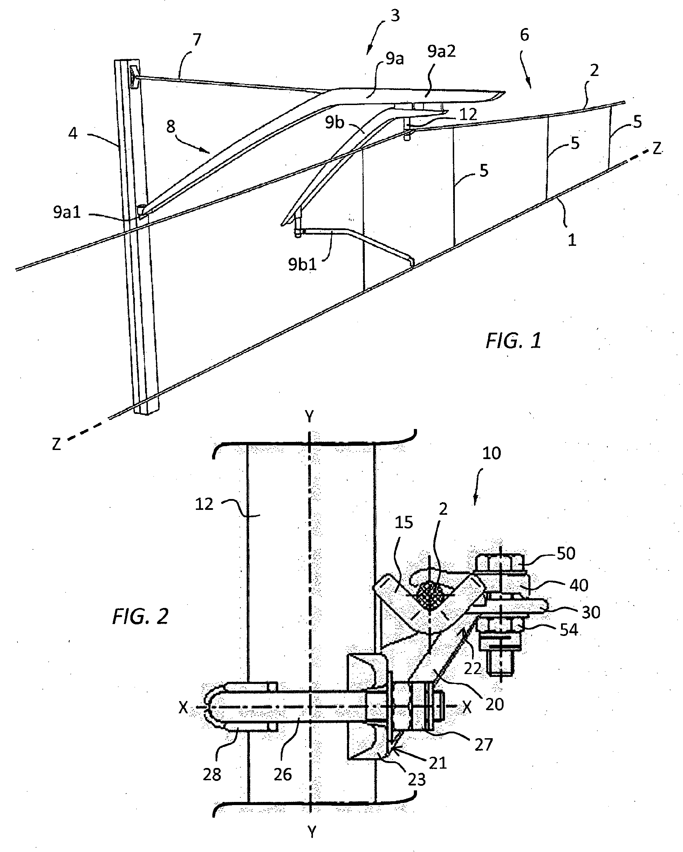

La figure 1 représente une caténaire 6 suspendue au-dessus d'une voie ferrée (non représentée) par un système de maintien 3 monté sur un poteau 4 sensiblement vertical. Un seul poteau 4 est représenté à la figure 1 mais il va de soi que la caténaire 6 est suspendue à une pluralité (non représentée) de poteaux disposés consécutivement le long de la voie ferrée.

La caténaire 6 comprend un fil de contact 1 et un câble porteur 2. Le fil de contact 1 permet d'alimenter en courant électrique des pantographes situés sur la partie supérieure des locomotrices des véhicules circulant sur la voie ferrée (non représentés).

Le fil de contact 1 s'étend longitudinalement selon un axe Z-Z et est suspendu au câble porteur 2 par une pluralité de pendules 5 sensiblement verticaux. Le câble porteur 2 est relié à chaque poteau 4 par un système de maintien 3.

### Système de maintien de la caténaire

Toujours en référence à la figure 1, le système de maintien 3 de la caténaire 6 au poteau 4 comprend un hauban 7 et une console 8.

La console 8 comprend un premier bras de support 9a monté par l'une de ses extrémités 9a1 sur le poteau 4 et relié également au poteau 4 par le hauban 7.

La console 8 comprend un second bras de support 9b monté au niveau de l'extrémité libre 9a2 du premier bras 9a. La console 8 comprend un montant de fixation 12 s'étendant verticalement sous le second bras 9b et sur lequel est monté le dispositif de support 10 selon l'invention, illustré aux figures 2 à 7.

Dans cet exemple, le montant de fixation 12 est tubulaire et s'étend sensiblement verticalement selon un axe Y-Y comme illustré à la figure 2. Il va de soi que le montant de fixation 12 pourrait être de forme différente et/ou de section différente, par exemple de section rectangulaire. Il va aussi de soi que la console 8 pourrait comprendre un autre type d'élément de fixation qu'un montant, par exemple un bloc de fixation, pour fixer le dispositif de support 10 de câble porteur 2 selon l'invention.

Comme illustré par la figure 1, le second bras 9b comprend, au niveau de son extrémité inférieure, une tige ou bras de rappel 9b1 qui permet de maintenir le fil de contact 1 sensiblement aligné avec le câble porteur 2 dans un plan vertical.

### Dispositif de support de câble porteur

Comme illustré aux figures 2 à 7, le dispositif de support de câble 10 selon l'invention comprend un bras de liaison 20 monobloc et un organe de fixation 26, 27, 28 du bras de liaison 20 au montant tubulaire de fixation 12.

Le bras de liaison 20 comprend une extrémité de fixation 21 au montant 12 se présentant sous la forme d'une paroi de butée 23 et une extrémité libre 22 se présentant sous la forme d'une goulotte de support 15 dans laquelle repose le câble porteur 2.

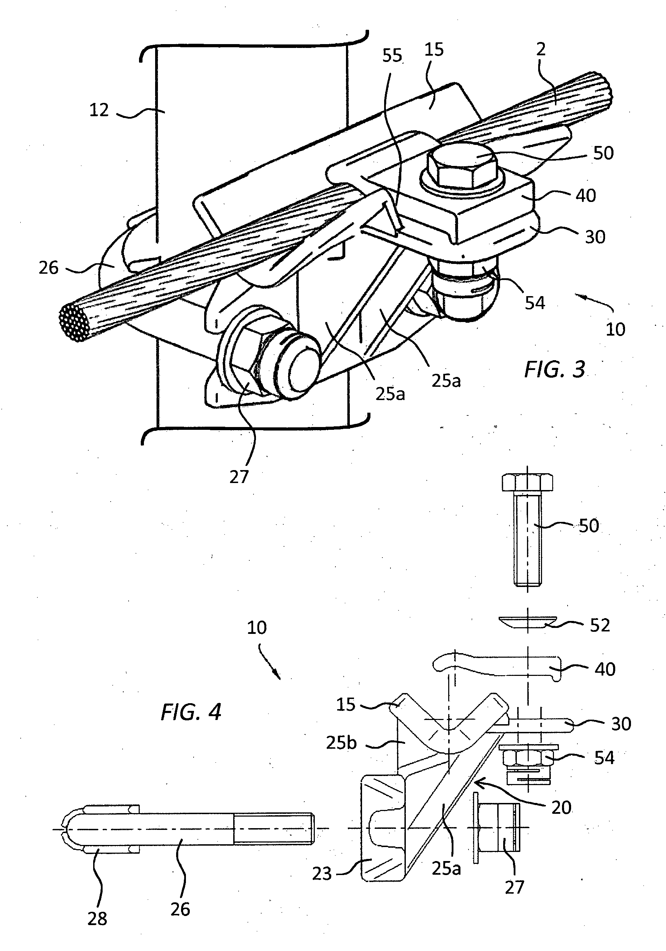

Dans cet exemple, comme illustré aux figures 3 à 7, le bras de liaison 20 comprend deux renforts 25a, s'étendant obliquement en saillie depuis la paroi de butée 23 et aux extrémités supérieures desquelles s'étend la goulotte de support 15, et un renfort 25b de support de la goulotte 15 s'étendant depuis la paroi de butée 23 jusqu'à la goulotte de support 15.

La goulotte de support 15 est ainsi supportée par le bras de liaison 20 qui s'étend obliquement par rapport à l'axe vertical Y-Y et par conséquent par rapport au montant de fixation 12.

Comme illustré sur les figures 2, 4 et 6, la goulotte de support 15 possède une section sensiblement en forme de V dont l'ouverture est d'environ 90° pour recevoir des câbles porteurs de différents diamètres.

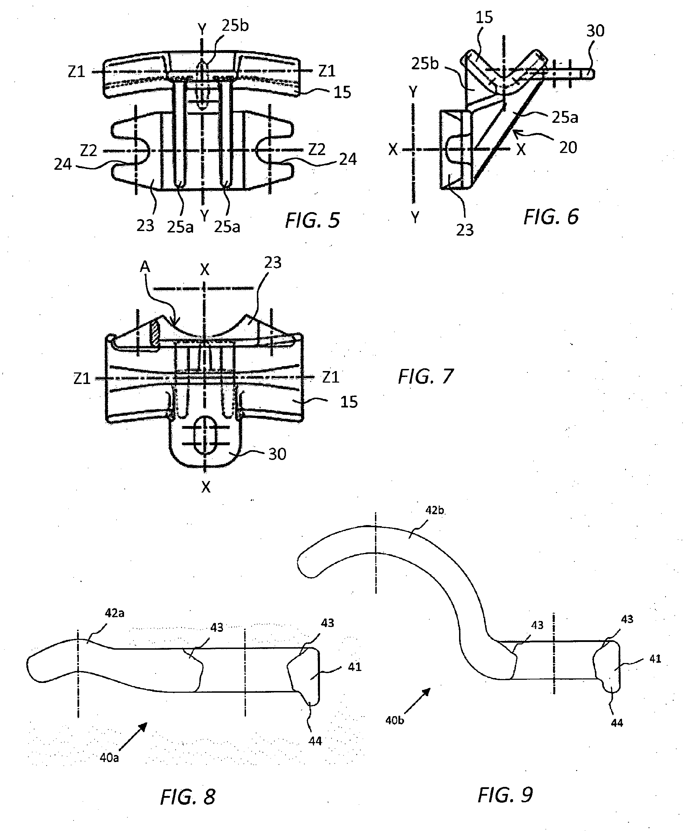

Comme illustré sur la figure 5, le profil de la goulotte de support 15 est légèrement incurvé par rapport à un axe horizontal Z1-Z1 de sorte que ses extrémités sont inclinées vers le bas afin de guider le support du câble porteur 2, notamment de manière à éviter que le câble porteur 2 puisse frotter au niveau des extrémités de la goulotte 15.

Dans cet exemple, la longueur de la partie horizontale de la goulotte 15 est sensiblement de la même largeur que le bras de liaison 20 de manière à garantir la répartition des efforts exercés par le câble porteur 2 sur le dispositif de support 10.

La goulotte de support 15 illustrée sur les différentes figures est configurée pour recevoir des câbles de différents types et de différents diamètres, tels que, par exemple, des câbles nus ou des câble protégés.

Comme illustré à la figure 7, la paroi de butée 23 du bras de liaison 20 comprend une portion arquée A agencée pour se conformer au montant de fixation 12.

Comme illustré à la figure 5, la paroi de butée 23 s'étend longitudinalement selon un axe Z2-Z2 parallèle à l'axe Z1-Z1 et délimite, à chacune de ses extrémités, une ouverture 24 de réception de l'organe de fixation 26, 27, 28.

L'organe de fixation 26, 27, 28 permet de solidariser en rotation et en translation le dispositif de support 10 avec le montant de fixation 12.

Dans cet exemple, comme illustré aux figures 2 à 4, l'organe de fixation se présente sous la forme d'un étrier de serrage 26 en forme de U dont les extrémités comportent un filetage, de deux écrous 27 et d'un élément intercalaire 28.

En position d'utilisation du dispositif de support 10, l'étrier en forme de U 26 est disposé selon un axe horizontal X-X de sorte que ses extrémités soient disposées à travers les ouvertures 24 de la paroi de butée 23 et les deux écrous 27 soient vissés sur les extrémités filetées de l'étrier 26 pour solidariser le dispositif de support 10 au montant 12.

L'élément intercalaire 28, par exemple un élément réalisé en un matériau plastique, est disposé entre le montant de fixation 12 et l'étrier 26 et permet d'améliorer l'adhérence de la liaison entre le dispositif de support 10 et le montant de fixation 12.

Ainsi, lorsque le dispositif de support 10 est monté sur le montant de fixation 12 de la console 8, comme illustré aux figures 2 et 3, la paroi de butée 23 est en appui sur le montant de fixation 12 et l'étrier 26 en forme de U entoure le montant de fixation 12 et est fixé à la paroi de butée 23 à l'aide des écrous 27.

Comme illustré par les figures 2 à 7, le dispositif de support 10 de câble porteur 2 comprend en outre une plateforme 30 de fixation d'une bride de serrage 40 d'un câble porteur 2. La plateforme 30 s'étend sensiblement parallèlement à l'axe horizontal X-X et perpendiculairement aux axes Z1-Z1 et Z2-Z2 depuis l'extrémité libre 22 du bras de liaison 20.

Comme illustré à la figure 3, la largeur de la bride de serrage 40 est sensiblement égale à celle de la plateforme 30 et à celle du bras de liaison 20 et est logée en appui dans un évidement 55 ménagé dans la goulotte 15 de sorte à être bloquée en translation pour ne pas être entraînée par le câble porteur 2 si celui-ci subit un déplacement parallèlement à l'axe Z1-Z1.

Comme illustré aux figures 2 à 4, la bride de serrage 40 est montée sur la plateforme 30 au niveau de son extrémité de fixation par un système comprenant une vis 50 à auto-centrage, une rondelle d'appui à portée sphérique 52 et un écrou 54. La rondelle d'appui à portée sphérique 52 permet de garantir une répartition uniforme du serrage sur la plateforme 30 et sur le câble porteur 2 grâce à l'auto-centrage de la vis 50.

Deux types de brides de serrage 40a et 40b sont illustrées respectivement par les figures 8 et 9. Les brides de serrage 40a et 40b se présentent chacune sous la forme d'une pièce longitudinale, de préférence en métal, comportant d'une part, une extrémité de fixation 41 à la plateforme 30 et d'autre part, une extrémité libre agencée pour venir en appui sur le câble porteur 2 afin de le pincer et de le maintenir dans la goulotte de support 15.

L'extrémité libre des brides de serrage 40a et 40b comprend une portion de maintien arquée (respectivement 42a et 42b) agencée pour être positionnée sur la périphérie d'un câble porteur 2 de manière à en épouser approximativement la forme et d'empêcher son glissement dans la goulotte support 15. A cet effet, la courbure de la portion de maintien arquée est adaptée pour être utilisée avec différents diamètres de câbles porteur 2.

La portion de maintien 42a illustrée par la figure 8 est relativement peu arquée, en d'autres termes son rayon de courbure est faible, de sorte à autoriser le maintien de câbles porteur de faible diamètre. En revanche, la portion de maintien 42b illustrée par la figure 9 est relativement arquée, en d'autres termes son rayon de courbure est élevé, de sorte à autoriser le maintien de câbles porteur de diamètre important, tel que, par exemple, des câbles protégés par un revêtement. La bride de serrage 40a, 40b peut ainsi être choisie en fonction du type et surtout du diamètre du câble porteur 2. Dans d'autres formes de réalisation, on peut imaginer que la portion de maintien est plate, convexe ou de tout autre forme et/ou bien comprend des éléments supplémentaires de maintien d'un câble porteur 2.

L'extrémité de fixation 41 comprend un orifice de réception 43 d'une vis 50 et une butée 44 d'appui de la bride de serrage 40a, 40b sur la plateforme 30.

### Exemple de mise en oeuvre de l'invention

Dans cet exemple, afin de monter le dispositif de support 10 sur le montant de fixation 12, on dispose tout d'abord l'étrier en forme de U 26 autour du montant tubulaire de fixation 12 de sorte que ses extrémités soient disposées à travers les ouvertures 24 de la paroi de butée 23 du dispositif de support 10.

On visse ensuite les deux écrous 27 sur les extrémités filetées de l'étrier 26 pour solidariser le dispositif de support 10 au montant 12.

Afin ensuite de procéder à la fixation d'un câble porteur 2 sur le dispositif de support 10, on dispose tout d'abord le câble porteur 2 dans la goulotte de support 15 puis on fixe la bride de serrage 40 sur la plateforme 30 en utilisant la vis 50, la rondelle d'appui à portée sphérique 52 et l'écrou 54 de manière à ce que la portion arquée de la bride 40 vienne pincer et maintenir le câble porteur 2.

Lors de l'utilisation du dispositif de support selon l'invention, l'élasticité de la bride de serrage 40, conférée notamment par son extrémité libre de pincement, permet à la fois de maintenir le câble porteur 2 dans la goulotte de support 15 tout en évitant la fragilisation, liées aux contraintes, des brins du câble porteur 2 pouvant en entraîner la rupture, contrairement aux étriers de l'art antérieur.

La portion arquée 42a, 42b de la bride de serrage, respectivement 40a, 42b, permettre ainsi d'utiliser, par exemple, la même bride pour pincer des types de câbles porteur 2 de diamètres différents.

La fixation de la bride de serrage 40 par une seule de ses extrémités autorise en outre un montage ou un démontage aisé de la bride 40 de manière à installer ou désinstaller un câble porteur 2. La maintenance de la caténaire 6 est ainsi exécutée avec plus de facilité que dans les solutions de l'art antérieur.

Afin de régler une caténaire à différentes hauteurs au-dessus de la voie, la position du dispositif de support 10 peut être ajustée verticalement le long du montant tubulaire de fixation 12, par exemple en desserrant les écrous 27. Une fois le dispositif de support 10 positionné à la hauteur souhaitée, les écrous 27 sont resserrés pour permettre la solidarisation du dispositif de support 10 sur le montant tubulaire 12 de la console 8.

Afin de faire zigzaguer le fil de contact pour répartir les frottements sur la bande de frottement du pantographe, le dispositif de support 10 peut être monté d'un côté ou de l'autre, selon l'axe X-X, du montant de fixation 12. Ainsi, par exemple, un premier poteau peut comprendre un premier système de maintien dans lequel le montant de fixation est disposé entre le premier poteau et le dispositif de support dudit premier système de maintien, et un second poteau peut comprendre un second système de maintien dans lequel le dispositif de support est disposé entre le second poteau et le montant de fixation dudit second système de maintien.

De manière alternative, il est aussi possible, dans un premier système de maintien relié à un premier poteau et comprenant un premier bras de support 9a et un second bras de support 9b comportant un bras de rappel 9b1, de monter ledit bras de rappel 9b1 de sorte à faire travailler le système de maintien en tension sous le premier bras 9a (comme illustré à la figure 1), et, dans un second système de maintien relié à un second poteau, consécutif au premier poteau le long de la voie, et comprenant aussi un premier bras de support 9a et un second bras de support 9b comportant un bras de rappel 9b1, de monter le bras de rappel 9b1 symétriquement par rapport au bras de rappel du premier système de maintien, par rapport à la caténaire 6, de manière à faire travailler le système de maintien en compression, de sorte que les dispositifs de support 10, respectivement du premier système de maintien et du second système de maintien, soient positionnés de part et d'autre du câble porteur 2 afin de faire zigzaguer le fil de contact 1 au-dessus de la voie ferrée.

## Revendications

1. Système de maintien d'une caténaire (6) au-dessus d'une voie ferrée, ladite caténaire (6) comprenant au moins un câble porteur (2) d'au moins un fil de contact (1) pour l'alimentation d'un pantographe d'un véhicule ferroviaire circulant sur la voie ferrée, ledit système de maintien (3) comprenant une console (8) et un dispositif de support (10) du câble porteur (2) de la caténaire (6), ladite console (8) comprenant au moins un bras de support (9a), destiné à être fixé par l'une de ses extrémités (9a1) à un poteau (4) sensiblement vertical disposé le long de la voie ferrée et par une autre de ses extrémités à la caténaire (6), et un montant de fixation (12) du dispositif de support (10), ledit dispositif de support (10) comprenant :
- un bras de liaison (20) monobloc comprenant une extrémité de fixation (21) fixée au montant de fixation (12) de la console (8), et une extrémité libre (22) se présentant sous la forme d'une goulotte de support (15) du câble porteur (2) et,
- au moins un organe de fixation (26 ; 27) du bras de liaison (20) au montant de fixation (12) de la console (8).

2. Système de maintien selon la revendication 1, dans lequel l'extrémité de fixation (21) du bras de liaison (20) au montant de fixation (12) est positionnée en-dessous de l'extrémité libre (22) du bras de liaison (20).

3. Système de maintien selon l'une des revendications précédentes, dans lequel le montant de fixation (12) est disposé verticalement.

4. Système de maintien selon l'une des revendications précédentes, dans lequel le montant de fixation (12) est tubulaire.

5. Système de maintien selon l'une des revendications précédentes, dans lequel l'organe de fixation (26, 27) est un organe de serrage, de préférence comprenant un étrier en forme de U (26) et deux écrous de serrage (27).

6. Système de maintien selon l'une des revendications précédentes, dans lequel l'extrémité de fixation (21) se présente sous la forme d'une paroi de butée (23) agencée pour venir en appui sur le montant de fixation (12) de la console (8).

7. Système de maintien selon la revendication précédente, dans lequel le bras de liaison (20) comprend au moins un renfort (25a, 25b) s'étendant en saillie depuis la paroi de butée (23) de manière à supporter la goulotte de support (15).

8. Système de maintien selon l'une des revendications précédentes, dans lequel le dispositif de support (10) comprend au moins une bride de serrage (40, 40a, 40b) d'un câble porteur (2) comprenant une extrémité de fixation (41) et une extrémité libre comportant une portion arquée (42a, 42b), adaptée pour se conformer au câble porteur (2), et étant positionnable de manière à pincer ledit câble porteur (2).

9. Système de maintien selon la revendication précédente, dans lequel le bras de liaison (20) comprend, au niveau de son extrémité libre (22), une plateforme de fixation (30) sur laquelle est fixée l'extrémité de fixation (41) de la bride de serrage (40, 40a, 40b).

10. Ensemble formé d'un premier poteau comprenant un premier système de maintien, selon l'une des revendications précédentes, et d'un second poteau disposé consécutivement au premier poteau le long de la voie ferrée et comprenant un second système de maintien, selon l'une des revendications précédentes, ensemble dans lequel, d'une part, le montant de fixation du premier système de maintien est disposé entre le premier poteau et le dispositif de support du premier système de maintien, et, d'autre part, le dispositif de support du second système de maintien est disposé entre le second poteau et le montant de fixation du second système de maintien.

## Patentansprüche

1. Haltesystem für eine Oberleitung (6) über einem Schienenweg, wobei die Oberleitung (6) mindestens ein Tragseil (2) mindestens eines Fahrdrahts (1) für die Versorgung eines Stromabnehmers eines Schienenfahrzeugs, das auf dem Schienenweg fährt, umfasst, wobei das Haltesystem (3) einen Ausleger (8) und eine Stützvorrichtung (10) des Tragseils (2) der Oberleitung (6) umfasst, wobei der Ausleger (8) mindestens einen Stützarm (9a) umfasst, der dazu bestimmt ist, mit einem seiner Enden (9a1) an einem im Wesentlichen vertikalen Mast (4), der entlang des Schienenwegs angeordnet ist, und mit einem anderen seiner Enden an der Oberleitung (6) befestigt zu sein, und einen Befestigungspfosten (12) der Stützvorrichtung (10) umfasst, wobei die Stützvorrichtung (10) umfasst:
- einen Monoblock-Verbindungsarm (20), der ein am Befestigungspfosten (12) des Auslegers (8) befestigtes Befestigungsende (21) und ein freies Ende (22) in Form einer Stützmulde (15) des Tragseils (2) umfasst, und
- mindestens ein Befestigungsorgan (26; 27) des Verbindungsarms (20) am Befestigungspfosten (12) des Auslegers (8).

2. Haltesystem nach Anspruch 1, wobei das Befestigungsende (21) des Verbindungsarms (20) am Befestigungspfosten (12) unter dem freien Ende (22) des Verbindungsarms (20) positioniert ist.

3. Haltesystem nach einem der vorhergehenden Ansprüche, wobei der Befestigungspfosten (12) vertikal angeordnet ist.

4. Haltesystem nach einem der vorhergehenden Ansprüche, wobei der Befestigungspfosten (12) rohrförmig ist.

5. Haltesystem nach einem der vorhergehenden Ansprüche, wobei das Befestigungsorgan (26, 27) ein Spannorgan ist, das vorzugsweise einen U-förmigen Bügel (26) und zwei Spannmuttern (27) umfasst.

6. Haltesystem nach einem der vorhergehenden Ansprüche, wobei das Befestigungsende (21) die Form einer Anschlagwand (23) hat, die ausgebildet ist, um sich auf dem Befestigungspfosten (12) des Ablegers (8) abzustützen.

7. Haltesystem nach dem vorhergehenden Anspruch, wobei der Verbindungsarm (20) mindestens eine Verstärkung (25a, 25b) umfasst, die sich aus der Anschlagwand (23) hervorstehend derart erstreckt, dass sie die Stützmulde (15) stützt.

8. Haltesystem nach einem der vorhergehenden Ansprüche, wobei die Stützvorrichtung (10) mindestens einen Spannring (40, 40a, 40b) eines Tragseils (2) umfasst, der ein Befestigungsende (41) und ein freies Ende umfasst, das einen gebogenen Abschnitt (42a, 42b) aufweist, der ausgebildet ist, um sich dem Tragseil (2) anzupassen und der derart positionierbar ist, dass er das Tragseil (2) umklammert.

9. Haltesystem nach dem vorhergehenden Anspruch, wobei der Verbindungsarm (20) im Bereich seines freien Endes (22) eine Befestigungsplattform (30) umfasst, auf der das Befestigungsende (41) des Spannrings (40, 40a, 40b) befestigt ist.

10. Einheit, die von einem ersten Mast, der ein erstes Haltesystem nach einem der vorhergehenden Ansprüche umfasst, und einem zweiten Mast, der aufeinanderfolgend auf den ersten Mast entlang des Schienenwegs angeordnet ist und ein zweites Haltesystem nach einem der vorhergehenden Ansprüche umfasst, gebildet ist, wobei bei der Einheit einerseits der Befestigungspfosten des ersten Haltesystems zwischen dem ersten Mast und der Stützvorrichtung des ersten Haltesystems angeordnet ist und andererseits die Stützvorrichtung des zweiten Haltesystems zwischen dem zweiten Mast und dem Befestigungspfosten des zweiten Haltesystems angeordnet ist.

## Claims

1. System for supporting a catenary (6) above a railway line, said catenary (6) comprising at least one suspension cable (2) for at least one contact wire (1) for supplying power to a pantograph of a railway vehicle travelling on the railway line, said support system (3) comprising a bracket (8) and a device (10) for supporting the suspension cable (2) of the catenary (6), said bracket (8) comprising at least one support arm (9a) which is intended to be attached, by one of the ends (9a1) thereof, to a substantially vertical post (4) arranged along the railway line and, by another of the ends thereof, to the catenary (6), and an attachment upright (12) of the support device (10), said support device (10) comprising:
- a one-piece connecting arm (20) comprising an attachment end (21) which is attached to the attachment upright (12) of the bracket (8) and a free end (22) in the form of a support chute (15) of the suspension cable (2), and
- at least one member (26; 27) for attaching the connecting arm (20) to the attachment upright (12) of the bracket (8).

2. Support system according to claim 1, wherein the attachment end (21) of the connecting arm (20) to the attachment upright (12) is positioned below the free end (22) of the connecting arm (20).

3. Support system according to either of the preceding claims, wherein the attachment upright (12) is arranged vertically.

4. Support system according to any of the preceding claims, wherein the attachment upright (12) is tubular.

5. Support system according to any of the preceding claims, wherein the attachment member (26, 27) is a clamping member, preferably comprising a U-bolt (26) and two clamping nuts (27).

6. Support system according to any of the preceding claims, wherein the attachment end (21) is in the form of a stop wall (23) arranged so as to rest on the attachment upright (12) of the bracket (8).

7. Support system according to the preceding claim, wherein the connecting arm (20) comprises at least one reinforcement (25a, 25b) projecting from the stop wall (23) so as to support the support chute (15).

8. Support system according to any of the preceding claims, wherein the support device (10) comprises at least one clamp (40, 40a, 40b) for a suspension cable (2) comprising an attachment end (41) and a free end comprising an arched portion (42a, 42b) capable of matching to the suspension cable (2) and being able to be positioned so as to grip said suspension cable (2).

9. Support system according to the preceding claim, wherein the connecting arm (20) comprises, at the free end (22) thereof, an attachment platform (30) on which the attachment end (41) of the clamp (40, 40a, 40b) is fixed.

10. Assembly formed of a first post comprising a first support system according to any of the preceding claims, and a second post arranged following the first post along the railway line and comprising a second support system according to any of the preceding claims, wherein, on the one hand, the attachment upright of the first system is arranged between the first post and the support device of the first support system and, on the other hand, the support device of the second support system is arranged between the second post and the attachment upright of the second support system.
